Europäisches Patentamt

European Patent Office

Office européen des brevets

(19)

(11)  EP 0 780 684 A1

(12)  **DEMANDE DE BREVET EUROPEEN**

(43) Date de publication:
25.06.1997  Bulletin 1997/26

(51) Int. Cl.⁶: $G01N\ 27/403$

(21) Numéro de dépôt: 96119847.0

(22) Date de dépôt: 11.12.1996

(84) Etats contractants désignés:
CH DE GB LI

(30) Priorité: 19.12.1995 FR 9515071

(71) Demandeur: UNIVERSITE DE GENEVE
CH-1211 Geneve 4 (CH)

(72) Inventeurs:
• Buffle, Jacques
1258 Certoux (CH)
• Tercier, Mary-lou
1207 Genève (CH)

• Belmont, Cécile
73400 Ugine (FR)
• Koudelka-Hep, Milena
2000 Neuchâtel (CH)
• Fiaccabrino, Giovanni Carlo
2016 Cortaillod (CH)

(74) Mandataire: Thérond, Gérard Raymond et al
I C B
Ingénieurs Conseils en Brevets SA
Rue des Sors 7
2074 Marin (CH)

(54)  **Microcapteurs et microsystèmes électrochimiques intégrés fiables pour l'analyse chimique directe de composés en milieux aqueux complexes**

(57)  Microcapteur pour mesures électrochimiques permettant de déterminer dans un milieu aqueux la concentration ou le gradient de concentration d'au moins un composé chimique de faible taille ou masse moléculaire sous forme organique, minérale, neutre ou ionique, comprenant un réseau (15) de microélectrodes (16), conformé sur une plaquette (10) supportée par un substrat isolant (7), et relié à un contact permettant de le connecter à un appareil de mesure par au moins un conducteur protégé par un revêtement isolant, caractérisé en ce que ledit microcapteur est totalement recouvert par un gel hydrophile (25) inerte vis-à-vis du composé chimique, ayant un taux d'hydratation d'au moins 70 % et une épaisseur d'au moins 10 fois supérieure à la taille des microélectrodes (16), et microsystème électrochimique intégré le comprenant.

Fig . 2

EP 0 780 684 A1

## Description

La présente invention a pour objet un microcapteur électrochimique et un microsystème électrochimique intégré permettant de mesurer de manière fiable la concentration de divers composés chimiques et d'ions dans des milieux aqueux complexes, sans que le résultat de la mesure ne soit perturbé par interférence avec d'autres composés du milieu, et en permettant de distinguer les différentes formes chimiques du composé analysé.

On connaît déjà des électrodes qui permettent de déduire la concentration d'un composé dans une solution en faisant appel à différentes techniques d'analyses électrochimiques basées sur des processus d'oxydo-réduction, et notamment aux techniques électrochimiques dynamiques. Ces techniques consistent à enregistrer une courbe des variables tension/intensité, c'est à dire une fonction F(U,I), selon différentes variantes expérimentales, soit en effectuant un balayage de tension en fonction du temps entre deux valeurs extrêmes, et en mesurant l'intensité résultante (voltammétries, polarographies, chronoampérométries), soit au contraire en effectuant un balayage d'intensité et en mesurant la tension résultante (chronopotentiométries). Toutes ces techniques sont utilisables avec le microcapteur et le microsystème électrochimique intégré selon l'invention, mais par commodité pour la suite de la description on utilisera uniquement le terme "voltammétrie" pour représenter l'ensemble de ces techniques. Dans le but de pouvoir effectuer des mesures dans un grand domaine de concentrations et en particulier d'augmenter fortement la sensibilité de la mesure, ainsi que de rendre la mesure plus spécifique d'un composé donné, diverses fonctions F (U, I) ont été proposées. Les techniques voltammétriques les plus couramment utilisées sont mentionnées ci-après. Elles permettent de mesurer des concentrations comprises entre $10^{-11}$ et $10^{-4}$ M ($10^{-9}$ à $10^{-2}$ g/l), et elles peuvent être classées dans les trois groupes ci-après, illustrés de façon non limitative par des exemples de mise en oeuvre.

i) Techniques sans préconcentration du composé à analyser : voltammétrie cyclique (cyclic voltammetry-CV).
ii) Techniques avec préconcentration électrochimique du composé sur le capteur : voltammétrie par redissolution anodique (Anodic Stripping Voltammetry-ASV); voltammétrie par redissolution anodique à onde carrée (Square Wave Anodic Stripping Voltammetry-SWASV)
iii) Techniques avec préconcentration chimique du composant sur le capteur : voltammétrie par adsorption et balayage cathodique (Adsorptive Cathodic Stripping Voltammetry-AdCSV).

Les techniques des deux derniers groupes permettent notamment de mesurer la concentration de nombreux composés à l'état de traces, jusqu'à $10^{-11}$ M, soit de l'ordre 0,001 $\mu$g /dm$^3$, lesdits composés pouvant être des composés organiques ou minéraux, sous forme neutre, anionique ou cationique, tels que les cations métalliques.

Les électrodes classiquement utilisées sont en général en or, platine ou carbone, et très souvent en mercure qui présente l'avantage d'une grande reproductibilité de sa surface.

Dans la publication de S.P. Kounaves, J. Buffle, ("An iridium based mercury film electrode, part I, selection of substrate and preparation", J. Electroanal. Chem., 216, 53-69 (1987) Réf. 1), les auteurs ont montré que l'iridium était préférable à toute autre matériau en raison de sa forte résistance à l'oxydation par l'oxygène, de sa très faible solubilité dans le mercure et de la bonne cohésion mercure-iridium. Il est ainsi possible de déposer du mercure sur l'iridium de sorte que l'électrode peut être utilisée soit comme électrode d'iridium (sans mercure), soit comme électrode de mercure, ce qui étend beaucoup son domaine d'utilisation. Il existe de nombreuses géométries et configurations mécaniques d'électrodes classiques (électrodes à disque, disque tournant, à goutte de mercure pendante ou tombante, à film de mercure, etc.) Leurs dimensions sont souvent de 0,1 mm à 10 mm. Il est connu que les microélectrodes de dimensions inférieures à 20 $\mu$m présentent plusieurs avantages, tels que la possibilité de mesures en milieu non agité ou en milieu de forte résistance électrique, et une plus grand stabilité de film de mercure. La fabrication de telles microélectrodes d'iridium avec dépôt de film de mercure a été décrite par R.R. De Vitre, M.L. Tercier, M. Tsacapoulos, J. Buffle, ("A mercury plated Iridium based microelectrode : preparation and some properties", Anal. Chem. Acta 249, 419-425 (1991), Réf. 2).

Des perfectionnements ont été apportés à ce procédé, parmi lesquels on peut citer les travaux de Kounaves S.P. et al (Brevet US 5,378,383, Réf. 3) concernant l'utilisation de la microtechnologie pour la fabrication d'un capteur à micro-électrodes. Dans ce brevet, l'électrode de travail est toujours en mercure et elle est en contact direct avec le milieu aqueux où s'effectue la mesure.

Dans une publication récente (G.C. Fiaccabrino, M.L. Terrier, J. Buffle, N. de Rooij, M. Koudelka-Hep - "Fabrication and characterisation of mercury-plated iridium microelectrode arrays", Transducers 95, Digest of Technical papers, vol. 2, 478 (1995), Réf. 4) les auteurs décrivent un procédé de fabrication par la technologie en film mince et photolithographie permettant d'obtenir un capteur du type précédent encore plus sensible et dont la fiabilité est accrue.

Une même technique voltammétrique permet de déterminer simultanément la concentration de plusieurs composés. De plus, ces techniques offrent la possibilité de passer de l'une à l'autre sans modification du milieu où s'effectue la mesure. Un même microcapteur, permet donc de détecter et de doser un grand nombre de composés chimiques organiques ou minéraux, ce qui rend ces techniques particulièrement utiles pour l'analyse chimique des milieux aqueux complexes d'origine biologique, industrielle ou environnementale. De telles mesures peuvent être effectuées soit par prélèvement d'un échantillon, par exemple une goutte de sang, soit directement in situ, par exemple dans les eaux d'un lac ou dans des sédiments marins au moyen de sondes incorporant le microcapteur, soit encore en ligne par exemple en tant que détecteurs dans des techniques de chromatographie séparative, ou d'analyse par injection de flux ("flow injection analysis").

Plusieurs difficultés limitent actuellement l'utilisation de ces techniques dans les milieux complexes. L'analyse de routine nécessite de pouvoir effectuer des mesures précises et fiables sur une longue période de temps, de nombreuses déterminations successives, et le capteur doit pouvoir être utilisé dans un milieu et/ou un environnement hostile. Le terme "milieu hostile" inclut des solutions à analyser contenant des composés dont on ne cherche pas à déterminer la concentration, mais qui interfèrent d'une manière ou d'une autre avec la mesure et en modifiant les conditions physico-chimiques à la surface de l'électrode en conséquence le signal voltammétrique. Un exemple de ce type d'interférences (interférences 1) concerne des composés qui s'oxydent ou se réduisent simultanément au composé analysé et dont les produits d'oxydo-réduction réagissent avec le composé. C'est le cas en particulier de l'oxygène présent dans la plupart des solutions, et dont la réduction produit une augmentation de pH au voisinage de l'électrode, et éventuellement la précipitation des ions métalliques à analyser, sous forme d'hydroxydes. Un autre type d'interférences (interférences 2) concerne les macromolécules, colloïdes et autres composés tensio-actifs qui ont tendance à s'adsorber à la surface de l'électrode en bloquant ou modifiant le transfert d'électrons entre l'électrode et le composé analysé. Un troisième type d'interférences (interférence 3) concerne les contaminations, c'est-à-dire le relargage d'ions à analyser, par le système de mesure lui-même. Le terme "environnement hostile" inclut l'utilisation du microcapteur dans des sondes placées in situ dans des conditions extrêmes (fond des océans, puits de forages, réacteurs chimiques industriels).

Une limitation supplémentaire des capteurs actuels réside dans le fait que le signal de mesure peut être influencé par le flux hydrodynamique ou l'agitation du milieu dans lequel s'effectue la mesure, en particulier lors d'une utilisation in situ comme mentionné ci-dessus. Ces agitations sont non contrôlées, et peuvent varier au cours du temps. Elle conduisent à l'obtention de résultats non reproductibles en particulier lors de mesures en continu sur de longues périodes.

Enfin, dans les milieux complexes mentionnés ci-dessus, le composé analysé (en particulier les cations métalliques) est souvent présent sous différentes formes chimiques (complexé ou non, sous différents états rédox, absorbé ou non sur des particules en suspension, etc.). Pour permettre une interprétation analytique correcte, le capteur doit être capable de distinguer entre ces différentes formes.

Les capteurs voltammétriques ou les systèmes électrochimiques actuellement connus, dans lesquels les électrodes ou les microélectrodes sont directement en contact avec le milieu de mesure, ne permettent de répondre de façon satisfaisante à aucune des exigences ci-dessus.

Une des solutions utilisée pour résoudre les problèmes de fiabilité résultant des interférences de type 1 et 2, consiste à prétraiter l'échantillon par des moyens physiques, chimiques où biologiques drastiques qui détruisent les interférences (acides ou oxydants forts, attaque enzymatique, etc.) Un tel procédé présente l'inconvénient de nécessiter des quantités importantes de réactif, de demander beaucoup de temps, d'être peu commode ou inapplicable pour des mesures in situ, et d'engendrer en retour des risques d'erreur, par exemple par contamination ou pertes par adsorption du composé à analyser sur les systèmes de prétraitement.

Le prétraitement présente également l'inconvénient de ne plus permettre de différencier les différentes formes chimiques du composé à analyser, alors qu'il est souvent essentiel de connaître leur teneur relative pour résoudre des problèmes industriels, médicaux, ou liés à l'environnement.

Les composés interférants de type 2, qui sont le plus souvent rencontrés dans les eaux naturelles, et dans les fluides biologiques et industriels, sont des substances colloïdales organiques ou minérales ou des composés à masse moléculaire relativement élevée, tel que les composés humiques et fulviques (produits de décomposition des végétaux) présents dans les sols et les eaux, ainsi que les protéines ou les polysaccharides. On a proposé de protéger la surface des électrodes au moyen de diverses membranes micro-poreuses, par exemple en Nafion ou en acétate de cellulose. Leur efficacité et/ou la fiabilité de leur préparation se sont toutefois avérées faibles, et en tout cas insuffisantes pour des capteurs voltammétriques devant être utilisés in situ sur de longues périodes. Dans certains cas aussi leur réactivité vis-à-vis des composés analysés empêche leur utilisation.

En ce qui concerne la protection des électrodes contre les variations de flux hydrodynamique, ou d'agitation dans le milieu à analyser, les techniques actuellement connues ne permettent pas de résoudre ce problème de façon satisfaisante. En particulier la seule réduction de la taille des microélectrodes est insuffisante pour rendre cette influence nulle ou négligeable. Il conviendrait en effet de disposer de microélectrodes de taille inférieure à $0{,}2\,\mu$, alors que les plus petites dimensions qu'on puisse atteindre par les techniques photolithographiques connues sont supérieures à $0{,}5\,\mu m$. Dans ces conditions, des variations de l'ordre de 30 à 50% du signal de mesure peuvent être dues au flux hydrodynamique du milieu analysé.

Certaines limitations à la reproductibilité des mesures effectuées avec les capteurs voltammétriques de l'art antérieur résultent aussi de la construction même desdits capteurs. En particulier, les facteurs limitant sont l'état de surface du film d'iridium déposé (qui influence la cohésion du mercure sur l'iridium), et les conditions de renouvellement du film de mercure sur l'iridium après un certain nombre de mesures. En effet, bien qu'un même film permette d'effectuer de nombreuses mesures en continu, pendant au moins plusieurs jours, il doit être renouvelé après cette période. Des conditions adéquates doivent être utilisées lors de cette opération pour éviter la formation en surface de l'électrode d'oxydes de mercure conduisant ultérieurement à un fonctionnement irreproductible du capteur. Ces aspects ne sont pas mentionnés dans les brevets antérieurement déposés (Réf. 3).

La présente invention procure un microcapteur et un microsystème électrochimique intégré procurant les conditions adéquates pour éviter les problèmes correspondants. De toutes manières, il faut noter que l'absence de protection sur les microcapteurs voltammétriques de l'art antérieur les rend fragiles et sensibles aux conditions extérieures. La protection physique des électrodes par le gel proposé dans la présente invention améliore beaucoup leur stabilité à long terme.

La présente invention a donc pour objet de remédier aux inconvénients susmentionnés des capteurs électrochimiques de l'art antérieur en procurant: i) un nouveau microcapteur, ii) un ensemble de microcapteurs, et iii) un microsystème électrochimique intégré robuste, fiable et susceptible de permettre sur de longues périodes de temps, de mesurer sans contamination la concentration de composés organiques ou minéraux, et notamment leur concentration à l'état de traces, et d'en différencier les formes chimiques en milieu aqueux, et notamment en milieu complexe pouvant contenir des substances susceptibles de perturber le signal de mesure.

A cet effet, l'invention a pour objet un microcapteur pour mesures électrochimiques permettant de déterminer dans un milieu aqueux la concentration ou le gradient de concentration d'au moins un composé chimique de faible taille ou masse moléculaire sous forme organique, minérale, neutre ou ionique, comprenant un réseau de microélectrodes, conformé sur une plaquette supportée par un substrat isolant et relié à un contact permettant de le connecter à un appareil de mesure par au moins un conducteur protégé par un revêtement isolant, caractérisé en ce que le microcapteur est totalement recouvert par un gel hydrophile, inerte vis à vis du composé chimique, ayant un taux d'hydratation d'au moins 70% et une épaisseur d'au moins 10 fois supérieure à la taille des microélectrodes.

Les microélectrodes peuvent être toutes interconnectées et former alors un microcapteur simple. Les microélectrodes, ou des groupes de microélectrodes, peuvent au contraire être isolées électriquement les unes des autres pour être adressables séparément et former alors un ensemble de microcapteurs électrochimiques. Ces microcapteurs, simple ou sous forme d'ensemble, sont utilisés associés avec au moins une électrode de référence et éventuellement avec une électrode auxiliaire, tel que les électrodes usuelles disponibles dans le commerce.

Selon un mode de réalisation préféré le microcapteur simple ou l'ensemble microcapteurs, l'électrode de référence et éventuellement l'électrode auxiliaire sont réunies sur un même substrat isolant pour former un microsystème électrochimique intégré.

Selon un mode de réalisation préféré, le microcapteur simple ou l'ensemble microcapteurs est formé d'un réseau de microélectrodes ayant une géométrie et une distribution variable, lesdites microélectrodes, interconnectées ou non, étant de petite taille en ayant par exemple un diamètre compris entre 0,5 et 30 $\mu$m pour des microélectrodes en forme de disques. D'autres géométries sont toutefois possibles. Le matériau les constituant est soit de l'iridium, soit de l'iridium recouvert d'une micro-goutte de mercure, soit les deux. L'iridium permet la détection et le dosage d'espèces chimiques ayant un potentiel d'oxydoréduction compris entre 0 et + 1,5V par rapport à Ag/AgCl 1M, tels que $O_2$, Hg(II), As(III) ou Se(VI). Les microélectrodes à goutte de mercure permettent de détecter et de doser des espèces chimiques ayant un potentiel d'oxydoréduction compris entre -1,5V et 0V par rapport à Ag/Agcl 1M, tels que $IO_3^-$, S(-II), Fe(II), Mn(II), Zn(II), Cd(II) Pb(II), Tl(I) ou Bi(III).

Dans un microsystème électrochimique intégré supportant sur une même plaquette un microcapteur simple ou un ensemble microcapteurs et une électrode de référence et éventuellement une contre-électrode, l'électrode de référence peut-être du type Ir/IrO$_2$ et la contre-électrode en iridium, bien que d'autres choix soient possibles. Pour un tel capteur, la fabrication du réseau de microélectrodes, peut être effectuée en utilisant la technologie de dépôt en couche mince et photolithographie, comme indiqué notamment par Kounaves et al, et Fiaccabrino et al déjà cités (Réfs. 3 et 4).

Pour satisfaire aux exigences de robustesse et de longévité du capteur, le gel doit posséder une résistance mécanique élevée, avoir une stabilité à long terme suffisante vis à vis des actions chimiques, enzymatiques et microbiologiques, avoir un gonflement indépendant des propriétés physico-chimiques du milieu aqueux, tels que le pH, la température et la force ionique, posséder une porosité suffisante pour permettre une diffusion peu ou pas freinée des composés chimiques à analyser, mais suffisamment faible pour retenir les composés macromoléculaires ou colloïdaux interférants. Le gel doit de préférence ne comporter aucun complexant, neutre ou chargé pour le composé à analyser. Par contre, il est souhaitable que la structure chimique du gel contienne des groupements, par exemple alcooliques, qui permettent de fixer des constituants contribuant à maintenir dans le gel les conditions physico-chimiques optimales (acide-base, rédox, complexants, etc.) pour la mesure du composé à analyser. Il est en particulier très utile de pouvoir greffer des composés permettant de tamponner le pH dans le gel et d'éviter ainsi des variations de pH au cours de la mesure, par exemple lors de la réduction de l'oxygène sur l'électrode.

Les gels répondant aux caractéristiques précitées peuvent être obtenus à partir des composés choisis par exemple parmi la cellulose ou des dérivés de cellulose, les dextranes réticulés, l'agarose purifiée à faible teneur en groupement sulfate ou carboxyl, l'agarose réticulée, le polyacrylamide, les polymères de polyacrylamide et d'agarose, et les hydroxyalkylméthacrylates, tel que l'hydroxyéthylméthacrylate (HEMA).

Les composés ou compositions permettant de conférer au gel des propriétés tampon acide-base sont bien connus

4

de l'homme de métier. Si le pH doit être fixé entre 5 et 9, ils peuvent être choisis par exemple parmi les tampons MES, PIPES, le chlorure de cholamine, HEPES, HEPPS, HEPPSO, MOPS et MOPSP. Selon la nature chimique du composé tampon, la fixation dans le gel peut s'effectuer comme indiquée précédemment par greffage chimique au moyen de liaisons covalentes. Cette fixation peut également s'effectuer directement par rétention du composé tampon sur le gel, soit par adsorption physique, soit par établissement de liaison hydrogène ou indirectement par adsorption sur des particules elles-mêmes retenues dans le gel par leur taille. Dans ce dernier cas les particules doivent elles-mêmes être inertes vis à vis du composé à analyser et peuvent être par exemple des billes d'agarose ou de silice.

Comme déjà indiqué, l'épaisseur du gel sur le microcapteur peut s'exprimer à partir de la taille des microélectrodes dont le diamètre est compris de préférence entre 0,5 et 30 $\mu$m. Les valeurs extrêmes de cette épaisseur dépendent également de la réalisation de deux conditions contradictoires. La couche de gel doit être suffisamment mince pour permettre un équilibrage rapide de la solution extérieure avec l'intérieur du gel, par diffusion des composés à analyser. L'expérience a montré que cette épaisseur devait être en général inférieure à quelques mm, de préférence autour de 1-2 mm. D'un autre côté, la couche de gel doit être suffisamment grande par rapport à la taille de chaque microélectrode, pour que le processus de diffusion du composé chimique à analyser sur ces électrodes ne modifie que très peu la concentration moyenne dans le gel. L'expérience a montré qu'avec des microélectrodes ayant un diamètre compris entre 0,5 $\mu$m et 30 $\mu$m, cette épaisseur devait être supérieure à 20 $\mu$m. On peut donc en déduire que l'épaisseur du gel doit en général être comprise entre 20 $\mu$m et 5'000 $\mu$m, une épaisseur de quelques centaines de microns étant généralement appropriée pour les espèces chimiques usuelles.

Le microcapteur simple, ou l'ensemble microcapteurs, ainsi que le microsystème électrochimique intégré selon l'invention, permettent donc de pallier les inconvénients de l'art antérieur en procurant un capteur robuste qui permet d'effectuer sur des longues périodes de temps des mesures directement dans le milieu aqueux contenant le composé chimique, sans que la mesure ne soit altérée par la présence de composés interférants de type 1 ou 2, avec une sensibilité accrue et une spécificité permettant de mesurer sélectivement les formes dissoutes du composé analysé, même lorsque ce composé se trouve aussi présent à l'état absorbé sur des colloïdes et particules, ou incorporé dans ceux-ci. Par acidification, la concentration totale peut être obtenue. Le microcapteur et le microsystème électrochimique intégré permettent donc d'obtenir directement sans manipulation, une mesure qui nécessite classiquement d'effectuer une filtration ou ultrafiltration, c'est-à-dire une opération qui peut être longue et perturbante (modification des composés de l'échantillon et contaminations ou pertes par adsorption lors de l'analyse de traces, interférences de type 3).

Dans le microsystème électrochimique intégré, l'électrode de référence ne possède pas sa propre solution ou son propre gel servant de pont avec la solution à analyser, comme c'est le cas des électrodes de référence classiques. Dans les systèmes classiques, les contaminations provenant de ce pont sont un problème important pour l'analyse de composés en concentrations inférieures à $10^{-8}$ M. Le microsystème intégré selon l'invention permet donc d'éviter ces contaminations. L'équilibrage des pressions entre la solution à mesurer et le pont des électrodes de référence classiques est aussi un problème lors de leur emploi dans les sondes in situ dans des milieux où les pressions sont plus grandes que 1 atmosphère (par exemple au fond des océans). Le présent microsystème permet également d'éviter ce problème.

La possibilité de retenir dans le gel des tampons qui y fixent les conditions physico-chimiques ont deux avantages : d'une part la mesure voltammétrique peut être faite dans des conditions optimum (par exemple, avec un tampon pH, on évite la précipitation des ions métalliques comme hydroxydes, lors de la réduction de l'oxygène), et d'autre part le potentiel de l'électrode de référence du microsystème intégré peut être fixé dans le gel grâce aux conditions chimiques stables de ce gel. Par exemple, le potentiel d'une électrode de référence intégrée Ir/IrO$_2$, peut être fixé par l'agent tampon acide-base qui est aussi celui utilisé pour éviter l'interférence de l'oxygène comme indiqué ci-dessus.

L'ensemble microcapteur selon l'invention, dans lequel les microélectrodes sont adressables séparément, permet de mesurer in situ le gradient de concentration d'un composé chimique sans perturbation du milieu de mesure, par exemple aux interfaces eau-sédiment ou eau-air. Les microélectrodes de microcapteur seront alors disposées en ligne, sur une distance de quelques centimètres et espacées par exemple de 100 $\mu$m. L'appareil de mesure associé au capteur comportera alors un multipotentiostat, permettant d'effectuer des mesures simultanées sur plusieurs électrodes.

L'invention sera mieux comprise à la lecture de la description ci-après d'exemples de réalisation d'un microcapteur d'un ensemble microcapteur et d'un microsystème intégré selon l'invention et des mesures effectuées avec celui-ci en référence aux dessins annexés dans lesquels :

- La figure 1 est une vue de dessus d'un dispositif de mesure comprenant un microcapteur simple;
- la figure 2 est une représentation partielle agrandie en perspective du microcapteur de la figure 1;
- la figure 3 est une vue agrandie d'une coupe de microcapteur de la figure 1 ou 2 au niveau d'une microélectrode;
- la figure 4 est une vue de dessus du microsystème électrochimique intégré comprenant un ensemble microcapteur;
- la figure 5 est une vue agrandie partielle de la coupe selon la ligne V-V de la figure 4;
- la figure 6 est un graphique relatif à la diffusion d'un composé à travers le gel, avec ou sans agitation;
- la figure 7 est un graphique de mesures dans un milieu contenant Pb et Cd;

- les figures 8 et 9 sont des graphiques montrant l'influence du gel en présence d'un interférant de type 2, et
- les figures 10 et 11 représentent des diagrammes de mesures des formes dissoutes et de la concentration totale de Pb(II) et Cd(II), directement dans une rivière.

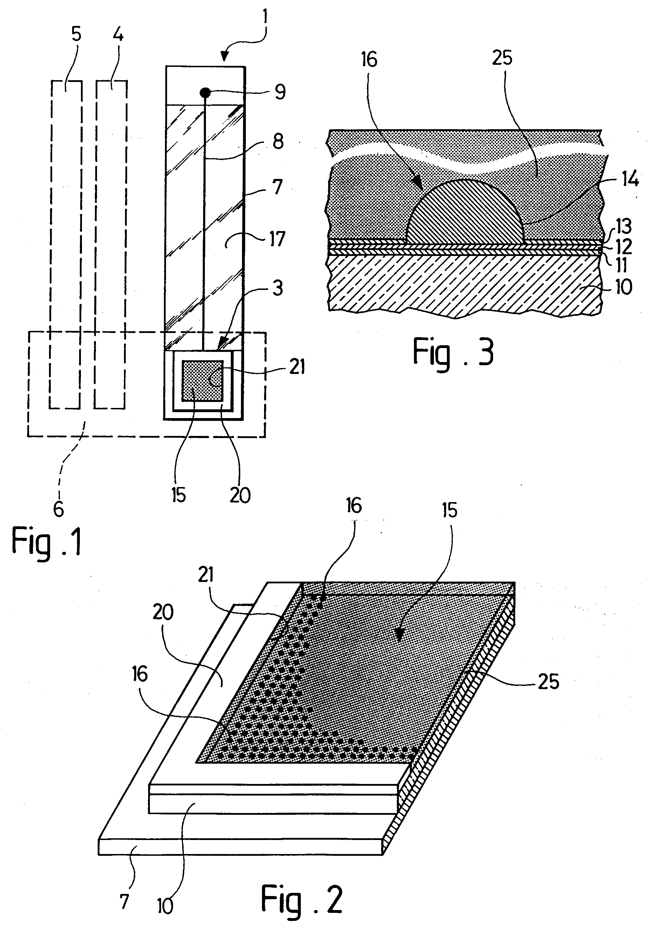

En se référant aux figures 1 à 3, on a représenté un capteur 1 comprenant un microcapteur simple 3, constituant l'électrode de travail, associe a une macro contre-électrode 4 classique et à une électrode de référence classique 5 pour former un dispositif de mesure électrochimique 6 destiné à être mis en contact avec le milieu aqueux dans lequel la mesure doit être effectuée. Dans l'exemple représenté, le microcapteur 3 est supporté par un substrat isolant mince allongé 7. La connexion avec un appareil de mesures, non représenté, s'effectue au moyen d'un contact 9 relié au microcapteur 3 par un conducteur 8 protégé sur toute sa longueur par un revêtement isolant 17 recouvrant le substrat 7. Le matériau formant le substrat 7 peut être choisi, par exemple, parmi le plexiglas et les résines époxy et avoir une épaisseur supérieure à 0,1 mm, une longueur supérieure à 1 cm et une largeur supérieure à 1 mm. Comme cela sera expliqué plus en détails en référence à un deuxième mode de réalisation, l'électrode de travail, la contre-électrode et l'électrode de référence peuvent également être réunies sur un même substrat pour former un microsystème électrochimique intégré.

En se référant maintenant à la figure 2, on voit que le capteur 3 fixé sur le substrat 7 est constitué par une plaquette 10 sur laquelle un réseau 15 de microélectrodes 16 a été structuré.

Le réseau 15 peut être délimité par l'ouverture 21 d'un cadre 20, à l'intérieur duquel on a disposé un gel 25. La plaquette 10 peut être une plaquette de silicium de petites dimensions (par exemple 4 x 4 mm), mais on peut également utiliser d'autres matériaux tels que la céramique, le verre ou une matière plastique, et d'autres dimensions. Dans l'exemple décrit, les microélectrodes 16 forment un réseau 15 interconnecté, une de ces microélectrodes étant représentée en coupe à la figure 3.

Selon la technologie connue de l'homme du métier pour obtenir des microstructures par déposition en couche mince et photolithographique, on a réalisé sur une plaquette en silicium 10 passivée par un dépôt 11 de $Si_3N_4$, de 1'000 Å à 2'500 Å d'épaisseur, par exemple 2'000 Å, un dépôt uniforme 12 d'iridium de 500 Å à 2'000 Å d'épaisseur, par exemple de 2'000 Å, fixé par un dépôt de tantale de 100 Å à 200 Å, par exemple 200 Å, puis déposé à sa surface une couche isolante 13 de $Si_3N_4$, dans laquelle on a formé par photolithographie des ouvertures délimitant chaque microélectrode 16, dont le diamètre peut être compris entre 0,5 et 30 $\mu$m et dont la géométrie peut être variable. Dans un microcapteur simple, dans lequel toutes les microélectrodes sont interconnectées, le réseau formé peut être régulier et l'espacement entre les électrodes compris entre 10 et 500 $\mu$m, bien que d'autres choix dimensionnels et d'autres géométries soient possibles. Les microélectrodes 16 sont ensuite soumises à un nettoyage électrochimique dans un bain d'acide nitrique purifié $10^{-2}$ M en appliquant une tension de - 1,9 V pendant 2 mn., et l'ensemble du réseau 15 est recouvert d'un gel 25, selon le processus décrit plus loin.

Selon le potentiel d'oxydo-réduction de l'espèce chimique à analyser, chaque microélectrode pourra ou non être recouverte de mercure par électrodéposition à travers le membrane formée par le gel. A cet effet, on utilise une solution d'acide perchlorique $10^{-1}$ à $10^{-3}$ M, typiquement $10^{-2}$ M contenant 1 à 100 mM, typiquement 5 mM d'acétate de mercure, en appliquant une tension de - 100 à - 1'000 mV, typiquement - 400 mV (par rapport à une électrode Ag/AgCl/KCl3M/NaNO$_3$ 0,1 M). Selon les techniques connues de l'art antérieur, la forme géométrique du dépôt de mercure peut être contrôlée par la durée d'électrodéposition. On peut par exemple obtenir un dépôt hémisphérique 14, comme représenté à la figure 3. La réoxydation du mercure est obtenue en effectuant un balayage en potentiel, typiquement de - 300 mV à 300 mV à 5 mV.s$^{-1}$ dans une solution dégazée de sulfocyanure de potassium 1 M. Quand cela est nécessaire, généralement après une durée d'utilisation du capteur supérieure à 10 jours, on observera que le processus de déposition/réoxydation du mercure peut être renouvelé, sans modification de la membrane formée par le gel. L'expérience a montré que le gel supportait sans détérioration de nombreux processus de régénération des micro-gouttes de mercure, la durée de vie du microcapteur selon l'invention pouvant aller au moins jusqu'à un an.

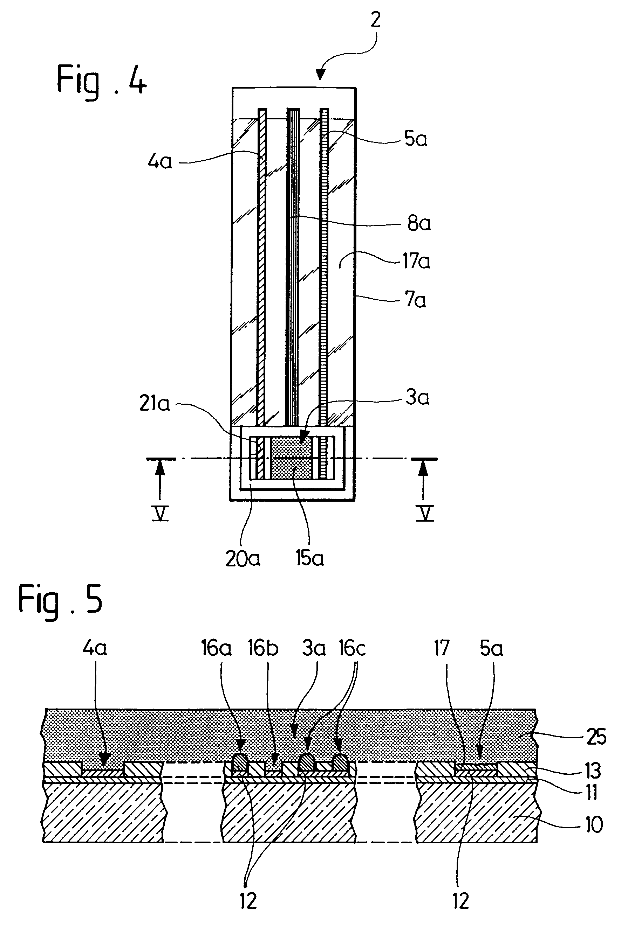

Aux figures 4 et 5, on a représenté schématiquement un microsystème électrochimique intégré 2 comprenant un ensemble microcapteurs 3a, c'est-à-dire un microcapteur formé de microélectrodes séparées à micro-gouttes de mercure 16a, ou sans micro-gouttes de mercure 16b ou de groupes de microélectrodes 16c interconnectées, chaque microélectrode ou groupe de microélectrodes étant isolé électriquement et pouvant être adressé séparément au moyen d'un faisceau de conducteurs 8a recouvert d'un revêtement isolant 17a, et/ou par multiplexage.

La configuration géométrique des microélectrodes sur la plaquette 10 peut être très variée. Il est par exemple possible de réaliser un réseau régulier adressable par multiplexage en lignes et colonnes, tel que le dispositif décrit par G.C. Fiaccabrino et al (Sensors and Actuators B, 18-19, 675-677 (1994), Réf. 5). Il est également possible de disposer les microélectrodes ou groupes de microélectrodes en ligne, selon l'axe du substrat 7 et disposer alors d'un microsystème électrochimique intégré permettant de mesurer le gradient de concentration d'un composé chimique donné près de l'interface de deux milieux ou dans un même milieu hétérogène. La conformation du réseau de microélectrodes est réalisée selon un processus analogue à celui décrit dans le premier mode de réalisation par la technique de dépôt en couche mince et photolithographie, avec une étape supplémentaire intermédiaire de gravure de la couche d'iridium par voie humide, par le procédé "lift-off" ou par voie sèche (plasma). Comme indiqué précédemment le réseau de microélectrodes est recouvert d'un gel 25. Un tel ensemble microcapteur peut être utilisé dans le dispositif décrit dans le premier mode de réalisation, c'est-à-dire avec une électrode de référence 5 et une électrode auxiliaire 4 séparée. Il peut aussi constituer l'électrode de travail d'un microsystème électrochimique intégré. Selon un mode de réalisation le plus simple, en augmentant la largeur du substrat 7 représenté à la figure 1, l'électrode de référence 5 et l'électrode auxiliaire 4a peuvent être disposées à côté du cadre 20a délimitant l'ensemble microcapteur 3a, par laminage ou électrodéposition de matériaux conducteurs appropriés. Selon un mode de réalisation préféré, représenté à la figure 4, le cadre 20a occupe pratiquement toute la largeur du substrat 7a et son ouverture 21a laisse apparentes les trois électrodes 3a, 4a, 5a qui sont alors totalement recouvertes d'un gel 25. Le gel doit alors contenir un composé chimique qui maintient le potentiel de l'électrode de référence à une valeur constante, par exemple un tampon de pH si l'électrode de référence est en $Ir/IrO_2$. On observera que, par rapport aux capteurs électrochimiques de l'art antérieur, une telle construction offre l'avantage de ne pas présenter de potentiel de jonction entre l'électrode de référence et l'électrode de travail, et d'éviter les contaminations dues aux ponts des électrodes de référence classiques. Des électrodes de référence autres que $Ir/IrO_2$ peuvent aussi être utilisées.

De façon avantageuse, les trois électrodes peuvent être structurées dans un même dépôt conducteur d'iridium 12, les microélectrodes étant non recouvertes 16b ou recouvertes 16a d'une microgoutte de mercure, comme indiqué dans le premier mode de réalisation, l'électrode auxiliaire étant laissée nue, et l'électrode de référence étant oxydée de façon électrochimique dans une solution d'acide sulfurique 0, 1 M, de façon à obtenir un dépôt d'oxyde d'iridium 17 et avoir le couple $Ir/IrO_2$.

Dans le microsystème électrochimique intégré qui vient d'être décrit, l'ensemble microcapteurs 3a peut également être un microcapteur simple 3, tel que décrit dans le premier mode de réalisation, le faisceau de conducteurs 7a étant alors réduit à un conducteur unique.

Le recouvrement du microcapteur, ou du microsystème électrochimique intégré, délimité par l'ouverture 21, 21a du cadre 20, 20a, par un gel, ainsi que les essais effectués avec lesdits dispositifs de mesure vont être décrits plus en détails en référence aux exemples ci-après.

## Exemple 1 - Formation d'un gel de polyhydroxyéthyl métacrylate (polyHEMA)

Après avoir construit le microcapteur comme indiqué précédemment, et préalablement à la formation du gel, il est peut-être souhaitable d'effectuer un prétraitement de la surface afin d'améliorer l'adhésion du gel à ladite surface. A cet effet, on peut par exemple utiliser un dérivé méthacrylique de silane en solution dans du toluène. On utilisera par exemple une solution de toluène contenant 10% de (triméthoxysilyl) propyl méthacrylate et 0,5% d'eau chauffée à 60° C.

Pour former le gel, on prépare une composition prépolymère contenant en poids, 57,5% d'hydroxyéthyl méthacrylate (HEMA), 38% d'éthylène glycol, 1% de diméthoxyphényl-acétophénone, 1% de polyvinylpyrolidone et 1% de tétraéthylèneglycol diméthacrylate et on dépose au moyen d'une micropipette ladite composition sur la plaquette supportant le microcapteur. On peut contrôler l'épaisseur de la membrane à former, soit en ajustant la quantité de composition prépolymère déposée, soit en réglant la vitesse de rotation dans le cas d'une application à la tournette. On applique ensuite une feuille de Mylar$^®$ à la surface, de façon à éviter que l'oxygène n'inhibe la réaction de polymérisation. En utilisant un filtre et un masque d'alignement standards, on expose la composition prépolymère au rayonnement UV pendant 30 s à 3 mn environ, puis on effectue le développement dans l'éthanol.

Il est également possible d'effectuer la polymérisation uniquement par voie chimique, en utilisant une composition prépolymère contenant 5 ml de HEMA, 0,02 ml de tétraéthylèneglycol diméthacrylate, 50 mg de $Na_2S_2O_8$, 100 mg de $Na_2S_2O_5$ en tant qu'initiateur rédox, 1,25 ml d'éthylène glycol et 1,25 ml d'eau. La quantité voulue de ladite composition est déposée dans la fenêtre 21 du cache 20 et on laisse la polymérisation s'effectuer à température ambiante pendant environ 48 h.

Le polymère ainsi obtenu est ensuite hydratable jusqu'à un taux supérieur à 70%. On observera également qu'en effectuant la polymérisation sous rayonnement UV, la présence d'un cadre 20 dans la construction du capteur n'est pas indispensable.

## Exemple 2 - Formation d'un gel de polyacrylamide (pAA)

On obtient un gel d'épaisseur voulue en procédant comme indiqué dans l'exemple 1, mais en partant d'une composition prépolymère contenant en poids 30% d'acrylamide, 5% de N, N'-méthylène diacrylamide, 0,1 mg/ml de phosphate de riboflavine, 2 µl/ml de N, N, N', N'-tétraméthyl éthylènediamine dans une solution tampon de glycérine (dans une proportion en volume comprise entre 1/1 et 1/3), avec une exposition au rayonnement UV de l'ordre de 1-10 mn. On procède ensuite au développement à l'eau.

Il est également possible d'effectuer la polymérisation uniquement par voie chimique, par exemple en laissant polymériser une solution d'acrylamide et de bisacrylamide avec du persulfate d'ammonium comme initiateur et du tétraméthyl éthylènediamine (TEMED), comme catalyseur. La solution est immédiatement placée sur le capteur et laissée à 40° C pendant environ 45 mn.

Exemple 3 - Formation d'un gel d'agarose

Pour former un gel possédant la résistance mécanique et les qualités chimiques souhaitées, on utilise de l'agarose ayant une grande pureté chimique, et en particulier une teneur en groupement sulfate < 0,3%, de préférence < 0,03%. La résistance mécanique étant définie comme la pression à appliquer pour fracturer un gel, une résistance mécanique adaptée au capteur selon l'invention doit être supérieure à 500 g/cm$^2$, de préférence de l'ordre de 2'000 g/cm$^2$. L'expérience a montré qu'un gel aqueux contenant 1 à 5% d'agarose répondait à la caractéristique mécanique précédente, pour différents types d'agaroses. Ceci permet d'avoir un gel répondant également aux qualités souhaitées au niveau de l'hydratation et de la porosité, ce qui assure une bonne reproductibilité de fabrication et par là-même une grand fiabilité dans les mesures effectuées avec lesdits microcapteurs.

Pour préparer le gel, on chauffe de l'eau distillée au bain-marie à 80° C, puis on ajoute sous agitation vigoureuse la quantité désirée d'agarose, par exemple 1,5%, puis on porte doucement la solution à ébullition, en maintenant l'ébullition environ 10 minutes jusqu'à dissolution de l'agarose. Le chauffage est alors arrêté et on laisse la solution dans le bain-marie jusqu'à complète élimination des bulles. Avec une micropipette, on dépose dans la fenêtre 21 du cache 20 une quantité de solution correspondant à l'épaisseur de gel désirée. On presse ensuite sur le gel une feuille de Mylar$^®$ ou on utilise la tournette pour obtenir une surface plane, et on laisse refroidir à température ambiante pendant quelques minutes. Comme indiqué dans l'exemple 1, la surface devant être recouverte de gel peut faire l'objet d'un prétraitement. Lorsqu'on souhaite tamponner le pH du gel, on ajoute un composé tampon à l'eau distillée servant à préparer le gel. Pour un milieu tamponné à pH 7-8, par exemple pour des mesures dans l'eau courante, on peut utiliser le tampon HEPES $10^{-2}$ M.

On obtient ainsi un gel d'agarose qui possède un volume constant, indépendant du temps et des propriétés physicochimiques du milieu aqueux où s'effectuent les mesures.

Exemple 4 - Influence de l'agitation sur la diffusion dans un gel d'agarose

L'expérimentation ci-après montre l'efficacité du gel du capteur selon l'invention, pour éliminer l'influence de l'agitation du milieu étudié, sur le signal mesuré, telle qu'on l'observe avec les capteurs de l'art antérieur. Le capteur utilisé est un microcapteur simple à goutte de mercure, de diamètre compris entre 6,3 $\mu$m et 7,6 $\mu$m, recouvert d'un gel d'agarose à 1,5% ayant une épaisseur comprise entre 800 et 850 $\mu$m. La solution d'essai contient 9,6 $\mu$M de Pb(II). La mesure voltammétrique a été effectuée par SWCSV avec un potentiel initial de - 100 mV, un potentiel final de - 1'100 mV, une amplitude d'impulsion de 25 mV, une amplitude de pas de potentiel de 4 mV et une fréquence de 50 Hz.

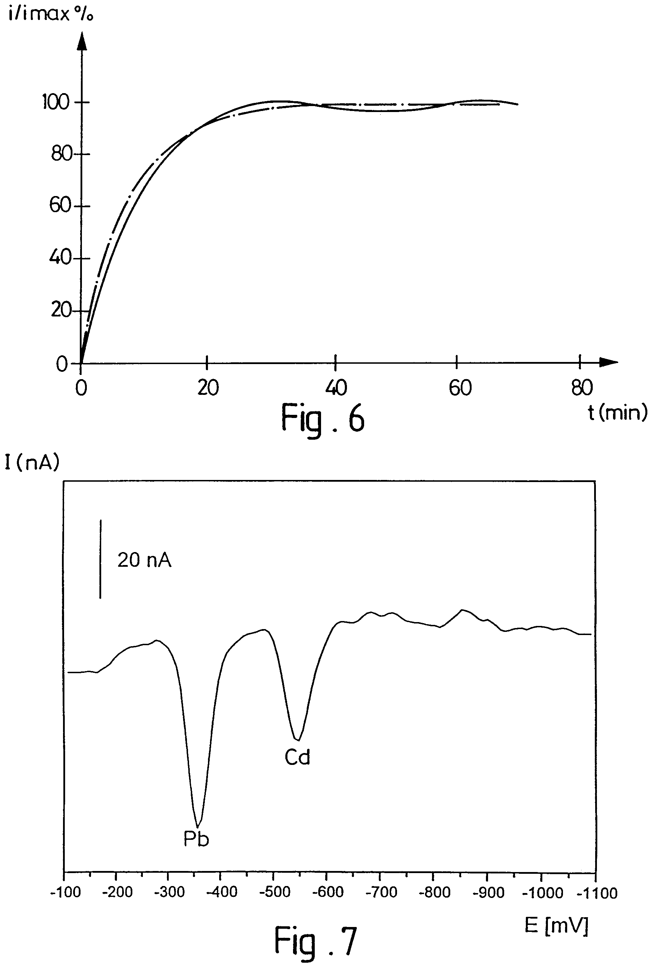

La figure 6 représente le courant de réduction de Pb(II) durant sa diffusion dans le gel, avec une solution agitée (courbe en trait plein) et non agitée (courbe en pointillés). Les deux courbes d'enregistrement étant pratiquement confondues, cette expérience montre clairement que le gel constitue une protection efficace contre les effets de l'agitation du milieu étudié, sur le signal mesuré.

Exemple 5 - Reproductibilité et limites de sensibilité d'un microcapteur à gel d'agarose

A la figure 7, on a rapporté un voltammogramme caractéristique, obtenu par la méthode de voltammétrie par redissolution anodique à onde carrée (SWASV), à partir d'une solution 0,1 M de NaNO$_3$, dégazée et tamponnée à pH 4, contenant 9,6 nM de Pb(II) et 8,9 nM de Cd(II), en utilisant un microcapteur à gouttes de mercure recouvert de 800 $\mu$m d'un gel d'agarose à 1,5%. La mesure a été effectuée en fixant les paramètres suivants : potentiel du dépôt - 1'100 mV; durée du dépôt 1 mn; potentiel final - 100 mV; amplitude d'impulsion 25 mV; amplitude de pas de potentiel 8 mV; fréquence 50 Hz. Dans ces conditions, en effectuant des mesures répétées sur une période de 5 à 6 heures, on a obtenu une bonne reproductibilité avec une déviation standard de l'ordre de 4% à la fois pour Pb(II) et Cd(II). Avec une durée de dépôt d 15 mn, on obtient avec les deux métaux une sensibilité aussi faible que 50 pM, avec des pics d'intensité encore deux fois supérieurs au courant de fond. Etant donné que des résultats comparables ont été obtenus avec un microcapteur sans gel d'agarose, on peut en conclure que le recouvrement des microélectrodes par un gel d'agarose n'affecte pas la performance du microcapteur. Bien plus, la sensibilité est accrue par rapport à celle décrite pour des capteurs non revêtus de gel (Réf. 3).

Exemple 6 - Efficacité d'un gel d'agarose pour la protection vis-à-vis des composés interférants de type 2

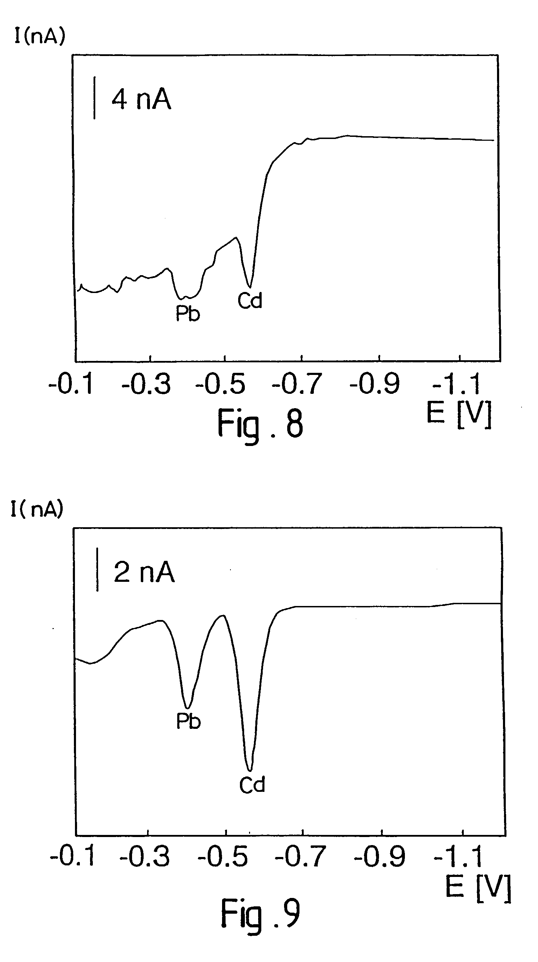

On a réalisé une solution 0,1 M de NaNO$_3$ et $10^{-2}$ M de tampon MES (pH 6,7) contenant 46 nM de Pb(II) et 42 nM de Cd(II) à laquelle on a ajouté 32 mg/l d'acides fulviques, concentration très supérieure à celle qu'on rencontre dans les eaux naturelles. On a ensuite effectué des mesures par la méthode SWASV, dans les mêmes conditions qu'à l'exemple 5, d'une part avec un microcapteur non recouvert d'un gel d'agarose (figure 8) et d'autre part avec un microcapteur selon l'invention (figure 9). La comparaison des deux courbes enregistrées montre clairement l'influence favorable du gel dans le capteur selon l'invention.

Ce qui précède a été confirmé par des mesures effectuées sur le terrain, en mesurant dans l'eau d'une rivière (Arve-Genève Suisse) la concentration de Pb(II), à quatre dates d'échantillonnage différentes, avec un microcapteur sans gel et un microcapteur avec un gel d'agarose à 1,5% selon l'invention, d'une part dans l'eau brute, d'autre part dans la même eau après filtration sur une membrane de porosité 0,2 $\mu$m. Les résultats sont rapportés dans le tableau ci-après :

| Numéro d'échantillon | Type de microcapteur | Concentration de Pb(II) dissous (nM) | |
|---|---|---|---|
| | | Eau brute | Eau filtrée sur 0,2 $\mu$m |
| 1 | sans gel | 0,21 | 0,96 |
| 2 | sans gel | 0,57 | 0,73 |
| 3 | avec gel | 0,70 | 0,62 |
| 4 | avec gel | 1,00 | 1,07 |

La comparaison des mesures dans les eaux brutes et filtrées montrent que les mesures dans l'eau brute avec un microcapteur sans gel sont trop faibles en raison des interférences dues aux colloïdes en suspension dont la concentration a varié entre 30 et 70 mg/l entre les échantillons 1 à 4. On constate au contraire que les colloïdes sont pratiquement sans influence sur les mesures effectuées avec le microcapteur selon l'invention, c'est-à-dire qu'une étape de filtration n'est pas nécessaire. On notera enfin qu'il est possible de mesurer de très faibles concentrations avec une marge d'erreur de $\pm$ 6%.

Exemple 7 - Mesure sélective directe de la concentration des formes dissoutes et de la concentration totale de Pb(II) et Cd(II)

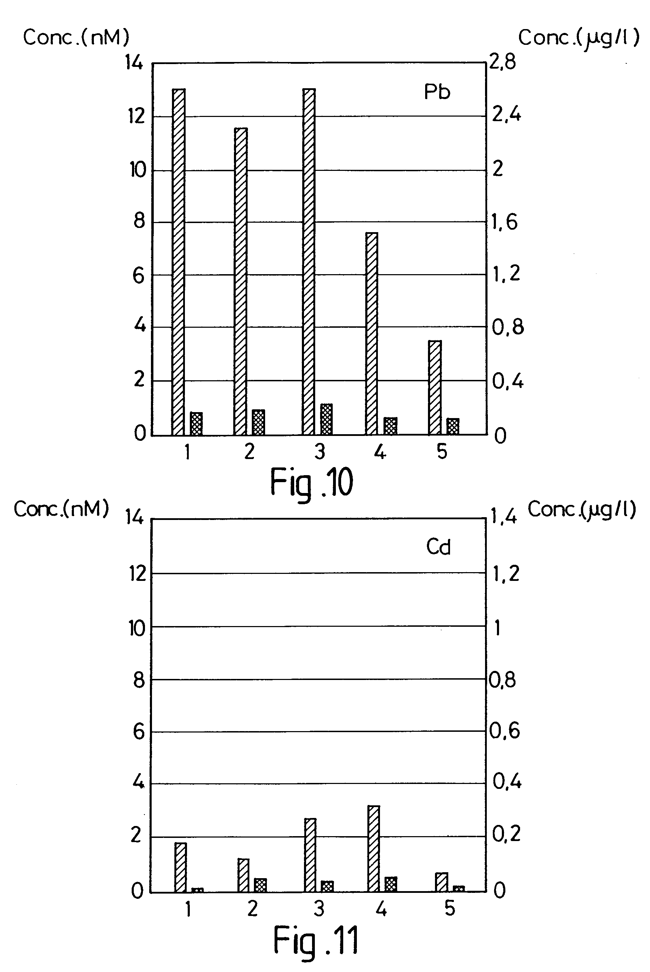

On a prélevé, à des moments différents, cinq échantillons de l'eau d'un rivière (Arve) et mesuré la concentration en Pb(II) (figure 10) et Cd(II) (figure 11) selon la même méthode SWASV que précédemment, d'une part sans traitement des échantillons (diagramme avec croisillons), d'autre part en acidifiant les échantillons (diagramme avec hachures) avec $HNO_3$ $10^{-1}$ M, les échantillons traités étant ensuite conservés deux jours pour permettre la désorption complète des métaux adsorbés sur les particules en suspension. Les diagrammes avec croisillons représentant les concentrations des formes dissoutes (taille < 3 - 5 nm) et les diagrammes hachurés représentent les concentrations totales. La différence entre les diagrammes hachurés et ceux avec croisillons représente la concentration des formes particulaires ou colloïdales des métaux. Les différences de mesure d'un échantillon à l'autre correspondent à des variations naturelles et on observe que, pour les cinq échantillons, les fractions dissoutes de Pb(II) et Cd(II) représentent respectivement $9 \pm 1,5\%$ et $14 \pm 2,8\%$ du total. On peut également noter la grande sensibilité de la méthode, la concentration minimale mesurée pour le Cadmium étant de 50 pM, soit 5,5 ng/l, avec une précision de 8% pour des concentrations inférieures à 1 nM.

Un microcapteur ou un microsystème électrochimique intégré selon l'invention, dans lequel les microélectrodes, interconnectées ou non, sont recouvertes d'un gel hydrophile constitue donc, un système nouveau et non évident, par rapport aux microcapteurs connus de l'art antérieur, notamment en ce que le composé analysé s'équilibre par dialyse entre le milieu étudié et le gel en permettant une analyse dudit composé à l'intérieur même du gel dont on peut alors contrôler et ajuster les conditions physicochimiques pour augmenter la fiabilité, la sensibilité et la reproductibilité des mesures effectuées.

**Revendications**

1. Microcapteur pour mesures électrochimiques permettant de déterminer dans un milieu aqueux complexe la concentration ou le gradient de concentration d'au moins un composé chimique de faible taille ou masse moléculaire sous forme organique, minérale, neutre ou ionique, comprenant un réseau (15) de microélectrodes (16) conformé sur une plaquette (10) supportée par un substrat (7) isolant, et relié à un contact (9) permettant de le connecter à un appareil de mesure par au moins un conducteur (8, 8a) protégé par un revêtement isolant (17, 17a), caractérisé en ce que ledit microcapteur est totalement recouvert par un gel hydrophile (25) inerte vis-à-vis du composé chimique, ayant un taux d'hydratation d'au moins 70 % et une épaisseur comprise entre 50 $\mu$m et 500 $\mu$m représentant au moins 10 fois la taille des microélectrodes et faisant écran aux colloïdes et macromolécules interférents ainsi qu'aux variations de conditions hydrodynamiques du milieu.

**2.** Microcapteur selon la revendication 1, caractérisé en ce que les microélectrodes (16) sont interconnectées pour former un microcapteur simple.

**3.** Microcapteur selon la revendication 1, caractérisé en ce que les microélectrodes (16), de façon individuelle (16a, 16b) ou par groupes (16c), sont isolées électriquement les unes des autres et adressables séparément pour former un ensemble microcapteurs permettant de déterminer des gradients de concentration dans un milieu hétérogène, ou les concentrations de plusieurs composés différents, en appliquant des conditions électrochimiques différentes sur chaque électrode.

**4.** Microcapteur selon la revendication 1, caractérisé en ce que les microélectrodes (16) formant le réseau (15) ont un diamètre compris entre 0,5 et 30 $\mu$m, obtenu par déposition en couche mince et photolithographie, en utilisant l'iridium comme dépôt conducteur.

**5.** Microcapteur selon la revendication 4, caractérisé en ce que tout ou partie des microélectrodes (16) est en outre revêtu d'un dépôt de mercure (14) par électrodéposition à travers le gel hydrophile (25) recouvrant le microcapteur, à partir d'une solution d'un sel de mercure.

**6.** Microcapteur selon la revendication 5, caractérisé en ce que le dépôt de mercure (14) a la forme d'une couche mince ou d'une partie de sphère, ladite forme étant contrôlée par la durée d'électrodéposition.

**7.** Microcapteur selon la revendication 1, caractérisé en ce que le réseau (15) de microélectrodes (16) est délimité par l'ouverture (21, 21a) d'un cadre (20, 20a) rendu solidaire du substrat (7).

**8.** Microcapteur selon la revendication 1, caractérisé en ce que le gel hydrophile (25) possède en outre une résistance mécanique élevée, une porosité et des caractéristiques diffusionnelles permettant la diffusion de l'entité chimique à analyser tout en formant une barrière pour des composés macromoléculaires ou colloïdaux.

**9.** Microcapteur selon la revendication 1, caractérisé en ce que le gel hydrophile (25) ne comporte dans sa structure intrinsèque aucun site complexant, neutre ou chargé, pour l'entité chimique à analyser et contient des groupements permettant de fixer des constituants contribuant à maintenir dans le gel des conditions physicochimiques optimales.

**10.** Microcapteur selon la revendication 1, caractérisé en ce que le gel hydrophile (25) incorpore un composé ou une composition destiné à fixer la valeur du pH à l'intérieur du gel, ledit composé ou ladite composition étant choisie par exemple parmi les tampons MES, PIPES, chlorure de cholamine, HEPES, HEPPS, HEPPSO, MOPS et MOPSP.

**11.** Microcapteur selon la revendication 1, caractérisé en ce que le gel hydrophile (25) possède une porosité suffisante pour permettre la diffusion du composé analysé, mais suffisamment faible pour retenir par leur taille des particules sur lesquelles sont fixés des composants maintenant des conditions physicochimiques stables dans le gel.

**12.** Microcapteur selon les revendications 8 à 11, caractérisé en ce que le gel hydrophile (25) est obtenu à partir d'un composé choisi parmi la cellulose ou des dérivés de cellulose, les dextranes réticulés, l'agarose purifiée à faible teneur en groupement sulfate ou carbonyl, l'agarose réticulée, le polycrylamide, les polymères de polyacrylamide et d'agarose, et les hydroxyalkylmethacrylates.

**13.** Microcapteur selon la revendication 12, caractérisé en ce que le gel hydrophile (25) est formé d'agarose dans une proportion de 1 à 5%, de préférence 1,5%, et possède un volume constant, indépendant du temps et des propriétés physiocochimiques du milieu aqueux où s'effectuent les mesures.

**14.** Microcapteur selon les revendications 1, 12 ou 13, caractérisé en ce que l'épaisseur du gel hydrophile (25) est, de préférence quelques centaines de microns.

**15.** Microsystème électrochimique intégré pour un dispositif de mesures électrochimiques permettant de déterminer dans un milieu aqueux la concentration ou le gradient de concentration d'au moins un composé chimique de faible taille ou masse moléculaire sous forme organique, minérale neutre ou ionique, comprenant une électrode de travail, au moins une électrode de référence (5a) et éventuellement une électrode auxiliaire (4a), caractérisé en ce que l'électrode de travail est un microcapteur (3, 3a) selon l'une quelconques des revendications 1 à 14 et en ce que les électrodes (3 ou 3a, 4, 5) sont supportées par un même support (7a) isolant, l'ensemble des électrodes étant recouvert d'un gel hydrophile (25).

16. Microsystème électrochimique intégré selon la revendication 15, caractérisé en ce que l'électrode de référence (5a) est une électrode Ir/IrO$_2$ et l'électrode auxiliaire (4a) une électrode Ir, les deux électrodes étant laminées sur ledit support (7a) ou formées par déposition en couche mince.

Fig .1

Fig . 3

Fig . 2

Fig . 4

2

4a

5a

8a

17a

7a

3a

21a

20a   15a

Fig . 5

4a   16a  16b  3a  16c        17   5a

25

13

11

10

12        12

Fig . 6

Fig . 7

I(nA)

4 nA

Pb

Cd

-0.1   -0.3   -0.5   -0.7   -0.9   -1.1

E [V]

Fig . 8

I( nA)

2 nA

Pb

Cd

-0.1   -0.3   -0.5   -0.7   -0.9   -1.1

E [V]

Fig .9

Conc.(nM)　　　　　　　　　　　　　　　　　　Conc.(µg/l)

Fig .10

Conc.(nM)　　　　　　　　　　　　　　　　　　Conc.(µg/l)

Fig .11

# EP 0 780 684 A1

**Office européen des brevets**

**RAPPORT DE RECHERCHE EUROPEENNE**

Numero de la demande

EP 96 11 9847

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | FR 2 360 074 A (THOMSON-CSF) <br> * page 4, ligne 8 - ligne 13; revendication 4; figure 3 * <br> --- | 1 | G01N27/403 |
| Y | ANALYTICAL CHEMISTRY, vol. 66, no. 3, 1 Février 1994, WHASHINGTON, DC, US, pages 418-423, XP000434607 S. P. KOUNAVES: "IRIDIUM-BASED ULTRAMICROELECTRODE ARRAY FABRICATED BY MICROLITHOGRAPHY" <br> * abrégé * <br> --- | 1 | |
| A | PATENT ABSTRACTS OF JAPAN vol. 12, no. 278 (P-738), 1 Août 1988 & JP 63 058149 A (MATSUSHITA ELECTRIC IND. CO.), 12 Mars 1988, <br> * abrégé * <br> --- | 1 | |
| A | FR 2 346 716 A (CGR-TMT) <br> * page 2, ligne 25 - page 3, ligne 10; figure 1 * <br> --- | 1 | DOMAINES TECHNIQUES RECHERCHES (Int.Cl.6) |
| A | SENSORS AND ACTUATORS. B CHEMICAL, vol. B21, no. 1, Juillet 1994, LAUSANNE, CH, pages 33-37, XP000479669 T. HERMES: "AN AMPEROMETRIC MICROSENSOR ARRAY WITH 1024 INDIVIDUALLY ADDRESSABLE ELEMENTS FOR TWO-DIMENSIONAL CONCENTRATION MAPPING" <br> * figure 2 * <br> --- | 1 | G01N |
| D,A | US 5 378 343 A (S. P. KOUNAVES) <br> * abrégé; figure 2 * <br> ----- | 1 | |

Le présent rapport a été établi pour toutes les revendications

| Lieu de la recherche | Date d'achèvement de la recherche | Examinateur |
|---|---|---|
| LA HAYE | 14 Mars 1997 | Duchatellier, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)